# EUROPEAN PATENT APPLICATION

(11) **EP 2 913 623 A1**
(43) Date of publication of application: **02.09.2015**
(21) Application number: 14382068.6
(22) Date of filing: 27.02.2014
(51) Int. Cl.: F41A 31/00, G03B 15/02, F42B 35/00

(54) **Weapon marking reader**

(71) Applicant: GEA Seguridad, S.L., 28100 Alcobendas (ES)
(72) Inventor: Gomez Rodriguez, Serafín Rafael, 28035 Madrid (ES)
(74) Representative: González López-Menchero, Álvaro Luis

(57) **Abstract**

Weapon marking reader which is generally T-shaped from a frontal view, comprising a vertical support (1) on the upper end of which there is an inverted U-shaped upper structure (2) with diverging sides or sloping flaps (2.1), inside which spotlights (4) are housed, whereas a camera (5) is arranged at the bottom of the upper structure (2); the sloping flaps (2.1) of the upper structure (2) have a slope such that the projection of the light radiated by the spotlights (4) is concentrated in a central area (6). Weapon inspection is facilitated as a result of the described reader, because it allows the display and recognition of weapon markings by automatic means in a safe and effective manner without requiring the presence of any law enforcement official.

## Description

### OBJECT OF THE INVENTION

As indicated by the title of the invention, the object of the present invention is a weapon marking reader, i.e., a device that allows reading the markings made in weapons corresponding to the serial numbers of said weapons.

The present invention is characterized by the special constructive features of the reader which allow both housing the means required for reading the weapon markings and the best arrangement thereof for the ends sought.

As a result of this reader, weapon markings can be read safely, effectively and remotely in an automated manner without requiring the presence of any personnel.

Therefore, the present invention is comprised in the field of data reading and recognition means by means of cameras and the like.

### BACKGROUND OF THE INVENTION

Reading markings in weapons to comply with certain formalities, such as weapon inspection, is a task which usually poses several complications for officials in charge of said formalities. The marking is often defective or it has deteriorated to the point that reading it with the unaided eye is not easy.

On the other hand, in those cases where renewing weapons licenses or giving first-time weapons licenses is to be done automatically from remote posts without the presence of an official, it is necessary to read the markings made on the weapons automatically, i.e., using technical means such that they assure a correct reading, and where the presence of a law enforcement official is furthermore not required. Therefore, the object of the present invention is to develop a weapon marking reading device where the reading is carried out automatically and reliably, without requiring the presence of any law enforcement official, developing a reader like the reader that is described below and the essential features of which are included in claim 1.

### DESCRIPTION OF THE INVENTION

The object of the present invention is a weapon marking reader consisting of a T-shaped structure with side flaps bent downwards on a rectangular base, the dimensions of which can be variable, depending on the purpose of the system and the type of weapons that are going to be used (pistols, rifles, etc.). It is a structure that creates an inner three-dimensional space in which the part of the weapon containing the marking to be read will be placed. The image of the marking is captured by means of a camera located at a suitable distance.

The primary marking of general interest in weapons is the serial number, although it is not the only one. Upon placing the weapon with the marking facing upwards in the reading area, the system lights it up such that the marked surface can be seen in detail through the camera located in the upper part of the structure, facilitating reading and identification thereof.

The reader comprises a vertical support structure fixed to a base, and at the upper end of which it has an inverted U-shaped upper structure with divergent sloping flaps, and on the inner face of which lighting means are arranged, whereas a camera is arranged at the bottom of the upper structure. The reader has control means comprising software for controlling the system and allowing the real time display, enlargement and capture of the images with the weapon markings.

The camera is small-sized in order to be housed in the structure, but it has high enough resolution to enable displaying and enlarging the image of the marking, such that the reading and identification of the content of the marking is much easier.

The system has been designed such that in order for the marking to be captured with enough quality to identify it, said system does not have to be at an exact distance from the camera, but rather there are margins within which the content of the marking can be identified.

The iris aperture had to be reduced to achieve greater depth of field, which means that the image darkens and for proper viewing additional lighting must be used. At least 5 cm of depth of field have been assured, whereby the iris aperture is at most F/4.

As a result of this feature, a wide range of weapons and markings can be read because not all weapons have the same width, nor are the markings found in the same areas. Therefore, upon arranging the weapon with the marking facing upwards, the thickness of the area where said marking is located does not affect the system.

As a result of using two spotlights lighting up the target from opposite sides, the occurrence of shadows which complicate viewing the marking is prevented.

In addition to the physical structure and the internal elements, the system is complemented with specific software that manages the system and allows the real time display, enlargement and capture of the images with the weapon markings. This software can be loaded in a standard PC with a monitor for display.

Said software can be customized in order to adapt to the specific needs which lead to using the system and the operating procedure that will be followed once the information is obtained.

The base on which the weapon is supported is important given that it must eliminate reflections that may be caused by the spotlights on it.

Weapon inspection is facilitated as a result of the described reader because it allows the display and recognition of weapon markings by automatic means in a safe and effective manner without requiring the presence of any law enforcement official.

### DESCRIPTION OF THE DRAWINGS

To complement the description that is being made and for the purpose of aiding to better understand the features of the invention according to a preferred practical embodiment thereof a set of drawings is attached as an integral part of said description in which the following has been depicted with an illustrative and non-limiting character.
Figure 1 shows a depiction of a frontal view of the weapon marking reader object of the invention.
Figure 2 shows a perspective view of the reader.
Figure 3 shows another different view of the reader, the inside of the outer casing being seen.
Figure 4 shows the reader in a different view.

### PREFERRED EMBODIMENT OF THE INVENTION

In view of the drawings, a preferred embodiment of the proposed invention is described below.

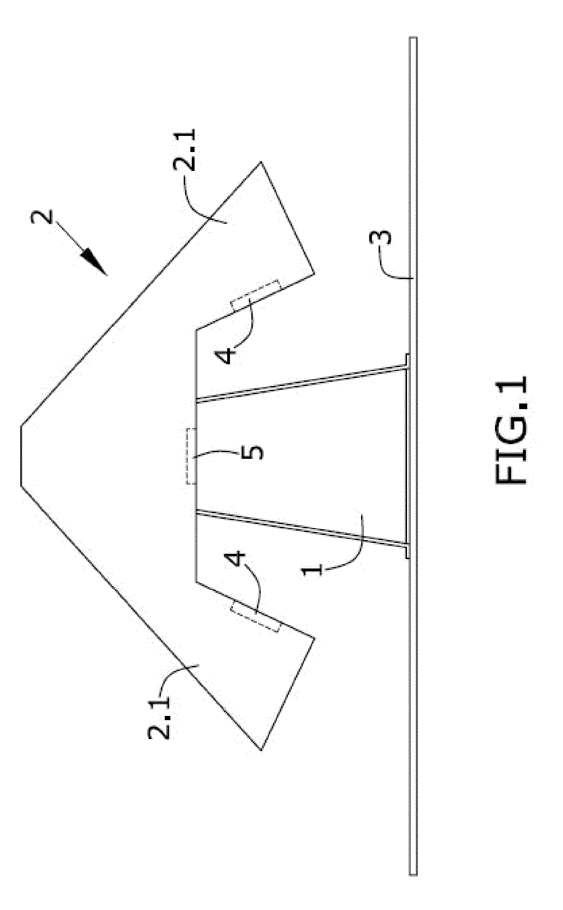

Figure 1 shows the weapon marking reader where it can be seen that the reader is generally T-shaped from a frontal view, comprising a vertical support (1) on the upper end of which there is an inverted U-shaped upper structure (2) with diverging sides or sloping flaps (2.1), inside which spotlights (4) are housed, whereas at the bottom of the upper structure (2) a camera (5) is arranged.

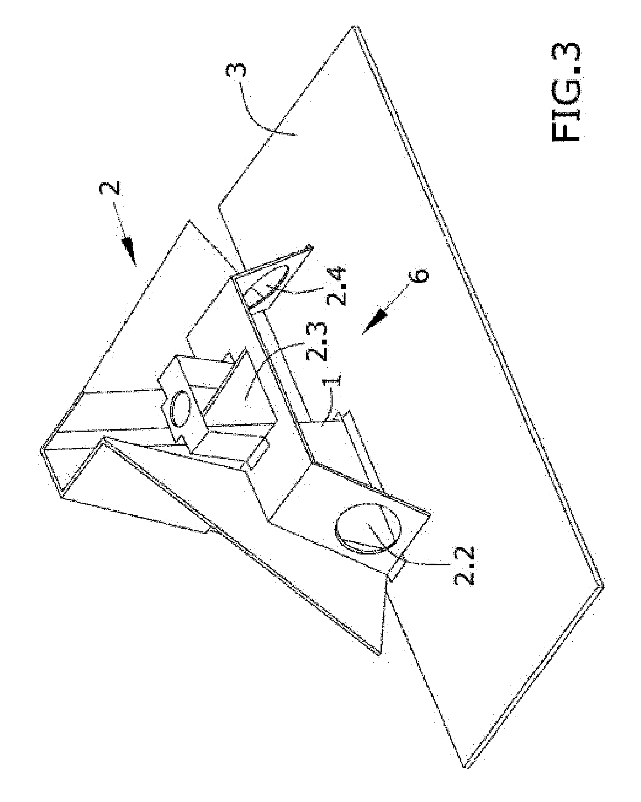

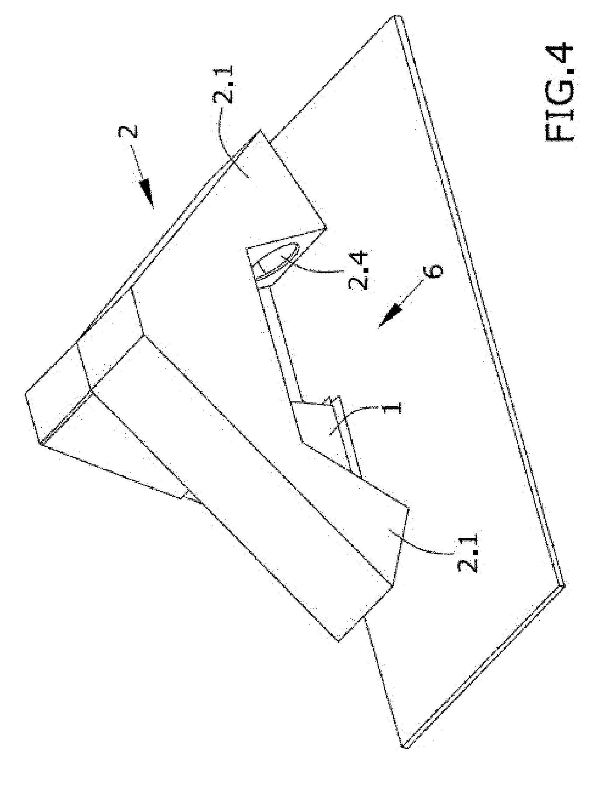

The sloping flaps (2.1) of the upper structure (2) have a slope such that the projection of the light radiated by the spotlights (4) is concentrated in a central area (6) (Figures 3 and 4).

The assembly is fixed and supported on a base (3) by means of the vertical support (3).

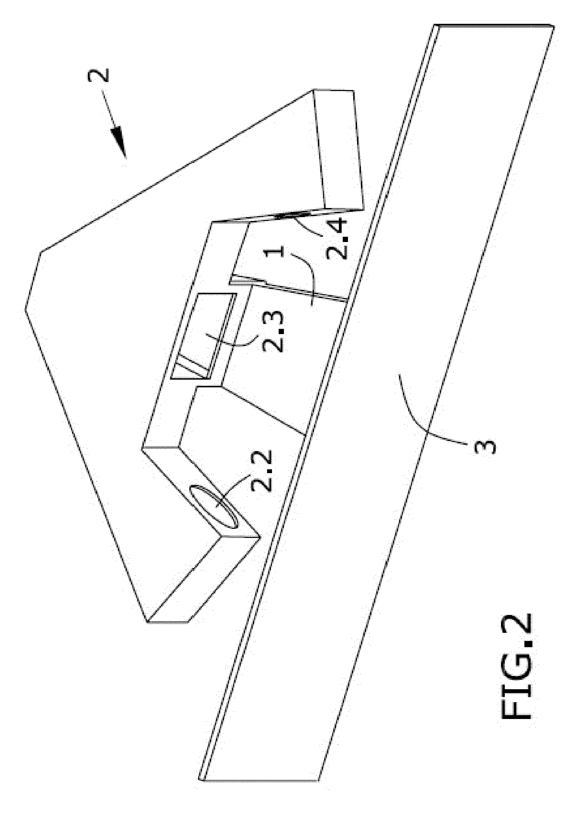

Figure 2 shows the upper structure (2) of the reader and the cavities made thereon, having cavities (2.2) in the inner faces of the sloping flaps (2.1) where the spotlights (4) are housed (Figure 1), whereas there is a cavity (2.3) at the bottom of the inverted U shape of the upper structure where the camera (5) is housed.

Figure 3 shows the inside of the upper structure (2) of the reader, pointing out how a central space (6) is defined between the base (3) and the upper structure (2) where the illumination from the spotlights (4) converges with the recording area of the camera (5).

Said central space (6) is for placing the part of the weapon containing the marking to be read by means of a camera (5) located at a distance such that it allows capturing the image of the marking.

In a possible embodiment, the camera has a resolution of at least 1280X1024 with a minimum sensor size of 1:8" and an optic thereof of 6 and 12 mm. To enable assuring a size of 64 pixels high in the character of the marking to be read, the camera is located at most 23 cm from the image to be captured.

In a possible embodiment the spotlights used (4) can be LED-type spotlights, which, despite their low consumption, sufficiently light up the area where the camera can read the marked surfaces. This is done with two spotlights of at least 290 lumens.

The structure furthermore means that the angle of incidence of the light emitted by the spotlights on the weapon is the best angle of incidence for most weapon types. The most suitable projection angle is around 65° with respect to the horizontal, calculated so as to optimize functionality, the light satisfactorily highlights most markings, regardless of the type of marking and especially regardless of the surface on which said marking is located, and regardless of the finish, material, color, curvature, shine, reflection, etc., making them readily visible, legible and interpretable.

In a possible embodiment, so that the base of the reader does not reflect the light, said base is lined with a ribbed, non-reflective black plastic material minimizing shine and reflections in areas that are not of interest as they are not part of the weapon.

Having sufficiently described the nature of the present invention as well as the manner of putting it into practice, it is hereby stated that within its essential features, said invention could be carried out to practice in other embodiments differing in detail from the embodiment indicated by way of example, and such embodiments will also be covered under the protection that is obtained provided that the fundamental principle thereof is neither altered, changed nor modified.

## Claims

1. A weapon marking reader, **characterized in that** it comprises:
- a base or support (3)
- a vertical support (1) fixed on the base (3)
- an upper structure (2) fixed on the upper end of the vertical support (1) and having an inverted U shape with outwardly divergent, sloping flaps (2.1).
- two spotlights (4) arranged at the ends of the sloping flaps (2.1) on their inner face
- a camera (5) arranged at the bottom of the inverted U-shaped upper structure (2).
- control means.

2. The weapon marking reader according to claim 1, **characterized in that** there are cavities (2.2) made on the upper structure (2) where the spotlights (4) are housed, and another cavity (2.3) made at the bottom of the inverted U-shaped structure where a camera (4) is housed.

3. The weapon marking reader according to claim 1, **characterized in that** the camera has a resolution of at least 1280X1024 with a minimum sensor size of 1:8" and an optic thereof of 6 and 12 mm.

4. The weapon marking reader according to claim 1, **characterized in that** the camera is located at most 23 cm from the image to be captured.

5. The weapon marking reader according to claim 1, **characterized in that** the spotlights used (4) are LED-type spotlights of at least 290 lumens.

6. The weapon marking reader according to claim 1, **characterized in that** the projection angle of the spotlights on a central space is 65° with respect to the horizontal.

7. The weapon marking reader according to claim 1, **characterized in that** the base of the reader is lined with a ribbed, non-reflective black plastic material.

8. The weapon marking reader according to any of the preceding claims, **characterized in that** the control means have software for controlling the system and allowing the real time display, enlargement and capture of the images with the weapon markings.
